# EUROPEAN PATENT SPECIFICATION

(11) **EP 2 724 042 B1**
(45) Date of publication and mention of the grant of the patent: **25.09.2019**
(21) Application number: 12746142.4
(22) Date of filing: 25.06.2012
(51) Int. Cl.: F16D 3/30

(54) **CONSTANT VELOCITY JOINT**
GLEICHLAUFGELENK
JOINT HOMOCINÉTIQUE

(30) Priority: 27.06.2011 SK 632011
(43) Date of publication of application: 30.04.2014
(73) Proprietor: Gecík, Martin, 08001 Presov (SK)
(72) Inventor: Gecík, Martin, 08001 Presov (SK)
(74) Representative: Porubcan, Róbert
(86) International application number: PCT/SK2012/050010
(87) International publication number: WO 2013/002743

(56) References cited:
- WO-A1-02/077479
- CN-A- 101 956 769
- JP-A- 4 083 917

## Description

### Technical Field

The subject matter of the invention is a constant velocity joint. The invention resolves the transfer of revolutions and torque from one shaft to another in such a way that both revolutions and angular velocity at the input shaft and the output shaft stay always the same with various values of the angle that both of the shafts may form. The condition of equal angular velocities represents the basic condition for the classification of the joint as a constant velocity joint. The present invention relates to the so-called fixed type of the constant velocity joint, where each of the shafts has a fixed position in respect of the joint centre point, and cannot move in the axial direction along its axis.

### Current State of the Art

We have been encountering the issue of mutual connection of two rotating shafts in a way that both energy and revolutions are transferred from one shaft to another in engineering industry practically from its origin. Mutual positions of shafts may vary, and adequate solutions exist for mutual connection of shafts in their various positions.

One of the most frequent situations is a situation, where the axis of the driving (input) shaft intersects in a single point with the axis of the driven (output) shaft, the angle between both of the axes of the shafts being variable during the operation, and shafts cannot move in the direction from or to the centre of the joint. The constant velocity joint in the front axle of a motor vehicle with the front drive, which connects the shaft of the front wheel with the half-axle protruding from the vehicle gear, is a typical example of such a type of connection.

The first usable type of this kind of connection of two shafts was apparently a joint by an Italian inventor, Girolamo Cardano, in the 16^{th} century and its enhancement by Robert Hook in the 17^{th} century. Universal joints, based on the ideas of these two early-modern period scientists, have been in use until now, especially in agricultural machines, trucks, etc. The disadvantage of the joints designed in this way consists in fact that the angular velocity at the output shaft cyclically differs from the angular velocity at the output during each revolution and depends on the mutual angles of shafts. The condition of equal angular velocities may be achieved in this solution in such a way that we employ two joints placed one after the other in such a way that the angle of the input shaft axis and the joint axis will always remain the same as the angle of the joint axis and the output shaft axis. In practice, however, it is a problem to achieve equal angles, this is why such types of joints are only employed in applications, where constant velocity is not a critical property.

The most frequently used type of the constant velocity joint is at present most probably the joint of the so-called Rzeppa-type or "Ball-Type CV joint" (where CV stands for constant velocity). Most of the present designs are more or less based on US patents US 1,665,280 of the year 1927, US 1,916,442 of the year 1929, US 2,010,899 of the 1933 or other patents of the same author.
The design of this type of a joint is generally based on six balls, which roll in paths of semi-circular cross section, formed at the outer ball surface of the input shaft and lie in planes crossing the shaft axis. The output shaft has similar grooves formed, but which are located in the inner surface of the ball cavity of the output shaft. Each ball touches both the groove on the inner shaft and the groove on the outer shaft. A very important part of this joint consists in a massive metal cage, whose purpose is to maintain the centres of the balls in a homokinetic plane. At one moment, each of the balls touches the path on the inner shaft, the path on the outer shaft, and some of the openings placed on the massive cage. The big disadvantage of this type of a joint is the fact that the entire load transmitted by the joint is actually transmitted only by the contact between the ball and the outer and the inner rolling paths. Considering the small amount of balls, the tension in contact places is very high, and its size significantly limits the maximum transmitted performance and the life of the entire joint. The rolling of the balls in paths is not only of a rolling nature, but each ball has to turn around the axis vertically to the shaft axis. Slipping of the ball toward the paths occurs, from which friction results. Another place where friction arises is in a place of contact between the ball and the cage, where only sliding friction always arises. The proportion of sliding friction in this type of a joint is rather high and manifests itself mainly in a considerable production of heat with bigger angles of joint tilting. The cage is inevitable for this type. The joint could not work without it. Its homokineticity depends on the quality of the cage and the quality of its placing in the joint. And since the cage has to have a certain clearance, the joint of this type is then not 100 per cent homokinetic. Another big disadvantage of this type of a joint is its zero tolerance to axial forces. The joint is unable to transmit any axial load. The manufacture of the joint is demanding, as it requires special machines for both manufacture and grinding of the rolling paths in the cavity of a ball-like shape.

Apart from the above mentioned types of joints, a high number of more or less homokinetic designs have been developed, which either did not apply at all, or are used very rarely. These include, for instance, the Tracta-type joints, represented, e.g., by the document FR 652829, Bendix-Weiss-type joints, represented, for instance, by the document DE 1 800 012, and the like. The joint according to the document WO 02/077479 A1 represents an attempt to resolve the problem of cyclical fluctuations in output revolutions of the Hooke-type joint. The author used two universal joints by having coaxially inserted one joint into the other joint, while the same viewing angle of the input shaft and the output shaft to the constant-velocity plane is realized by a complex spatial parallelogram. Although the joint is one of constant-velocity, it is still very complicated and bulky, and is therefore unsuitable for mass use, for example, in passenger cars. The joint according to the document under CN 101956769 is of a concept different to that of the previously described joints. Its author withdrew it obviously due to too broadly worded patent claims, which practically embraced the whole of the existing state of the art in technology. An interesting, but unfortunately totally dysfunctional solution, is the joint by the document JP 4 083917 A. It has been found out by computer simulation of the model that the joint according to the above document is not of constant velocity, and what occurs under load is an ever increasing turning of one shaft toward the other shaft, resulting in the collapse of the whole mechanism.

### Substance of the Invention

The invention is defined by claims 1 to 10. The substance of the invention is a new principle and technical design of the constant velocity joint, which differs from commonly used designs. The purpose of the invention is to remove the main shortcomings of the existing designs and to create a simple, reliable, and truly constant velocity joint.

According to this invention, the constant velocity joint consists in the input shaft and the output shaft and several pairs of spherical arms. Each shaft has a hub formed for the rotation attachment of the spherical arm. Each shaft bears so many rotation hubs (bearings) as there are pairs of spherical arms used in the joint. The axis, around which each of the mounted spherical arms can rotate, forms an angle with the axis of the shaft and passes through the central point of the joint - the homokinetic point.
The spherical arm is a body created from an imaginary ball surface of a certain thickness. A hub for rotation attachment to the shaft is created at one end of the spherical arm. A hub for rotation attachment to another spherical arm of the pair of arms is created with other members of the joint. The axes of both of the rotation hubs of each spherical arm form an angle *γ*, they lie in one plane, and intersect each other. The angle *γ*, formed by the axes of both rotation hubs, should be the same at each arm. To prevent mutual rotation of shafts, it is necessary to somehow fix the positions of spherical arms in relation to the homokinetic plane. This role will be played in the joint of this invention by a stabilising mechanism or simply by a stabiliser.

The joint stabilising mechanism by this invention is placed in the space between the input shaft and the output shaft and is composed of an equal number of segments, such as the number of pairs of spherical arms. Each stabilising segment is rotationally connected to one of the pairs of spherical arms in such a way that each of the spherical arms rotates in relation to the stabilizing segment around its own axis of rotation, and these axes intersect the common rotational axis of the stabilising segments in a single point. When rotating the input shaft to the output shaft, each of the stabilizing segments has along with the pair of spherical arms a tendency to depart from the homokinetic plane. If segments were not be tied to each other, each of the stabilising segments would change its position relative to the homokinetic plane along with a pair of spherical arms. However, if we combine all of the stabilising segments in such a way that we restrict all of their degrees of freedom, leaving them only the possibility of mutual rotation around a single axis, we then fix all of the rotational axes of pairs of spherical arms to the same plane. And since each of the spherical arms on one side of the homokinetic plane has the same angular length (i.e. the angle γ between both of the rotational axes is the same at each arm) as the other spherical arms on the other side of the homokinetic plane, all of the spherical arms on the one side of the homokinetic plane will be on the mirror-like plane in relation to the spherical arms on the other side of the homokinetic plane, and the mutual rotation ***Φ*** of both shafts will not be possible. The joint designed in such a way will be then homokinetic. At mutual offset of shafts by the angle ***α**,* changes of angles ***η1**, **η2**,* and ***η3*** will appear, which are formed by stabilising segments. These angles will vary in cycles during one rotation of the joint with the shafts offset - they will either increase or decrease.

In the case described so far, the rotational axes of two arms intersected each other in the central point of the joint, and each of them was diverted from the homokinetic plane by a fixed predetermined angle. It is possible to form a joint, when the rotational axes of two spherical arms do not intersect at all. The design of this type of the joint is almost identical with the previous joint, with the difference that each stabilising segment carries two rotational axes for the attachment of spherical arms, which, however, do not intersect at a single point, but run in parallel. Each rotational axis for the attachment of the spherical arm intersects with the rotational axis of the stabilising segment in a single point. The joint designed in this way has then two central points of the joint, and also two homokinetic planes. It is also possible to form functional joints, in which the rotational axes of spherical arms, carried by the stabilising mechanism, are intersected under the axis of the stabilising mechanism or above the axis of the stabilising mechanism.

For joints with the number of pairs of spherical arms bigger than three, the same regularities apply as in the previously described designs with three pairs of spherical arms. An important criterion here is the relative position of spherical arms in each pair. As described above, the rotational axes of the pair of arms may be coaxial, they may intersect each other in the central point of the joint, they may be parallel and not to intersect at all, or they may intersect each other, but their point of intersection will not lie in the axis of the stabilising mechanism.

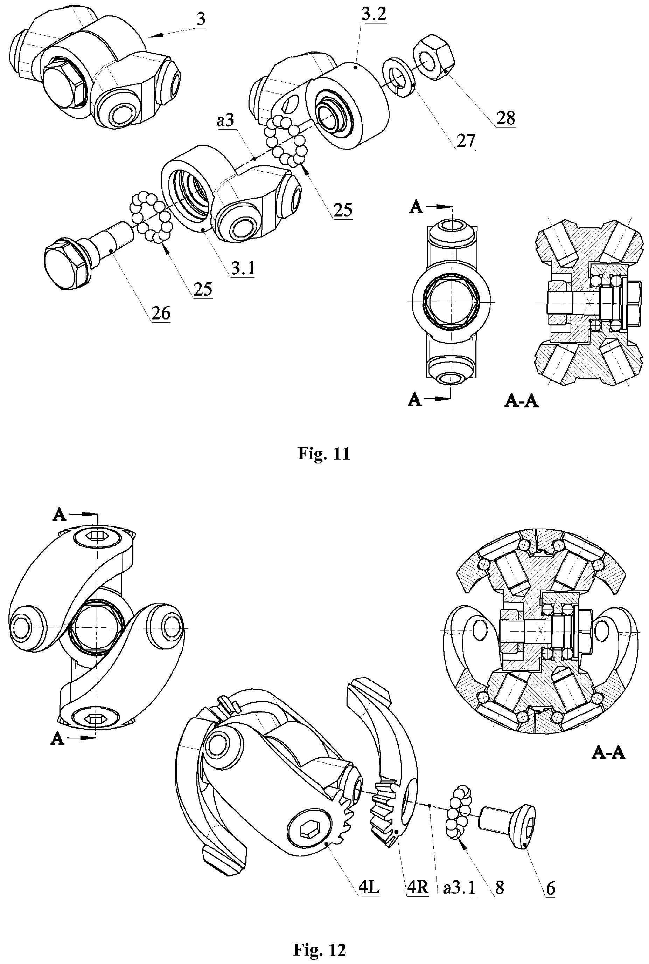

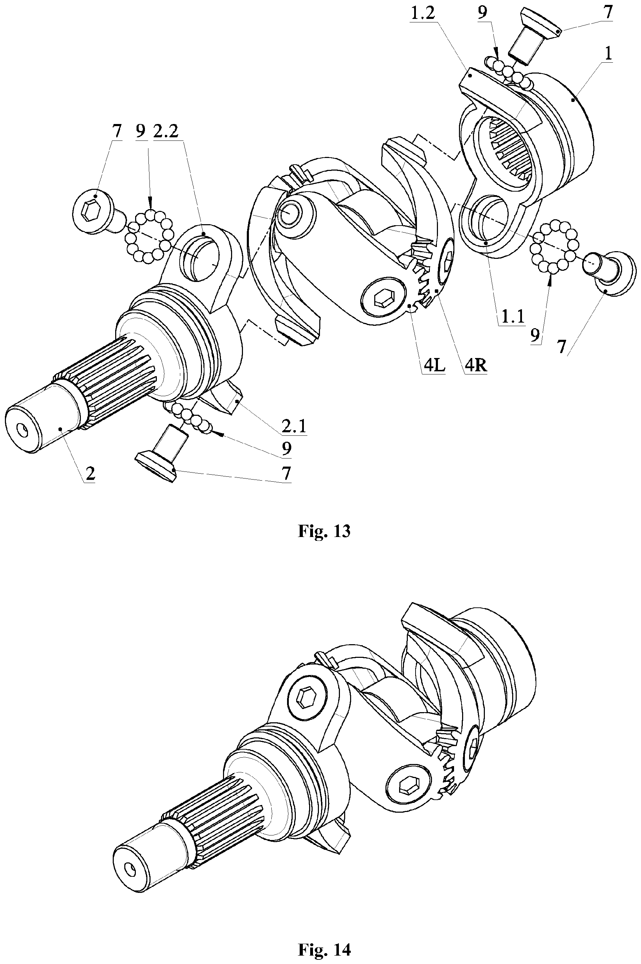

From the economic and design points of view, it would be interesting to reduce the number of pairs of spherical arms only to two of them. The number of arms on each of the shafts would be also reduced to two, as well as the number of segments of the stabilising mechanism. The joint designed in this way will, however, not be stabilised, because it will not prevent mutual rotation of the input shaft and the output shaft. It is necessary to add an extra feature in this design of the joint, which was not necessary with the joints having three or more pairs of spherical arms. With the joints containing three and more of the spherical arms, the stabilising effect of the stabilising mechanism manifests itself in such a way that in each pair of the stabilising arms, one arm forms with the homokinetic plane the same angle as the other arm of the pair forms with the plane. We could say that the homokinetic plane in these joints appears as a mirror - the position of spherical arms on the one side of the homokinetic plane is a mirror-like image of the position of spherical arms on the other side of the homokinetic plane. Therefore, it is necessary to add a function of a mirror-like position of spherical arms relative to the homokinetic plane into the joint with the number of pairs of spherical arms equalling two. This means that the movement of one spherical arm of the pair must be proportionally bundled with the other spherical arm of the same pair. The angle ***ε**₁*, by which one spherical arm of the pair departs from the homokinetic plane, has to have the same size as the angle ***ε**₂*, by which the other spherical arm of the same pair departs from the homokinetic plane. There are many technical designs that would ensure a mirror-like and proportional movement of two bodies. With this joint, it is convenient to use a gear with the 1:1 gear ratio in such a way that the gear will be directly integrated or tightly coupled with the spherical arms in the place, where both of the spherical arms of the same pair are closest to each other. In Figure 12, each of the pair of spherical arms is provided with a toothed part, and both of the toothed parts are engaged. Figure 13 shows a joint with two pairs of toothed spherical arms. The function, which the gear in this joint performs, may be implemented, in addition to various types of gear, by a cam gear or the like.

According to the mutual positions and arrangement of spherical arms and segments of the stabilising mechanism, we may also produce a joint with two pairs of spherical arms as a joint, where the rotational axes of the pair of arms may be coaxial, they may intersect in the central point of the joint, they may be parallel and not to intersect at all, or they may intersect each other, but their point of intersection does not lie in the axis of the stabilising mechanism.

The main advantage of the constant velocity joint according to this invention is simplicity of shape of its individual parts and low production cost, especially when compared to the currently perhaps the most widespread joints of the so-called Rzeppa-type or "Ball-Type CVJ". In contrast to this most widespread concept, the joint according to this invention is truly homokinetic, it is able to bear axial load, and there are no hubs with sliding friction. We may therefore assume a significantly higher efficiency of this new joint and a significantly longer lifetime. Another big advantage, compared to today's most widespread concept, is a considerably higher dimension of the tilting angle of the shafts, which may be several times higher than it is customary at present.

### List of Figures in Drawings

In Fig. 1, the stabilising mechanism is shown in several views of the joint with three pairs of spherical arms, where the axes of each pair of spherical arms have the common point of intersection with the axis of the stabilising mechanism.
Fig. 2 introduces the stabilising mechanism with the mounted spherical arms, designed for the joint with three pairs of spherical arms, where the axes of each pair of spherical arms have the common point of intersection with the axis of the stabilising mechanism.
In Fig. 3, the constant velocity joint is shown in a spatial, partially exploded view with the stabilising mechanism and spherical arms according to Fig. 1 and Fig. 2.
In Fig. 4, there is the joint of Fig. 3 shown in its assembled condition.
In Fig. 5, there is the stabilising mechanism shown in several views of the joint with three pairs of spherical arms, where the axes of each pair of spherical arms, supported by a stabilising segment, are in parallel.
Fig. 6 presents the stabilising mechanism with the mounted spherical arms, designed for the joint with three pairs of spherical arms, where the axes of each pair of the spherical arms, supported by a stabilising segment, are in parallel.
In Fig. 7, the constant velocity joint is shown in a spatial, partially exploded, view with the stabilising mechanism and spherical arms according to Fig. 5-and Fig. 6.
Fig. 8 shows the joint of Fig. 7 in its assembled condition.
In Fig. 9, the constant velocity joint is shown in an exploded and folded view. with the same geometric orientation of each pair of spherical arms.
In Fig. 10, the constant velocity joint is shown in an exploded and folded view with the alternately opposite geometric orientation of each pair of spherical arms.
In Fig. 11, the stabilising mechanism is shown for the joint with two pairs of spherical arms, the rotational axes of which, supported by a stabilising segment, intersect each other on the axis of the stabilising mechanism.
In Fig. 12, there is a stabilising mechanism according to Fig. 11, fitted with two pairs of spherical arms, each of them with a part fitted with a bevel involute gear.
In Fig. 13, the constant velocity joint is shown in a spatial, partially exploded, view with the stabilising mechanism and spherical arms according to Fig. 11 and Fig. 12.
In Fig. 14, the joint of Fig. 13 is shown in its assembled condition.
In Fig. 15, the stabilising mechanism is shown for the joint with two pairs of spherical arms, the rotational axes of which, supported by a stabilising segment, run in parallel.
In Fig. 16, the stabilising mechanism according to Fig.15 is displayed, fitted with two pairs of spherical arms, each with a part fitted with a spur involute gear.
In Fig. 17, the constant velocity joint is shown in a spatial, partially exploded, view with the stabilising mechanism and spherical arms according to Fig. 15 and Fig. 16.
In Fig. 18, there is the joint of Fig. 17 shown in its assembled condition.

### Examples of the Invention Implementation

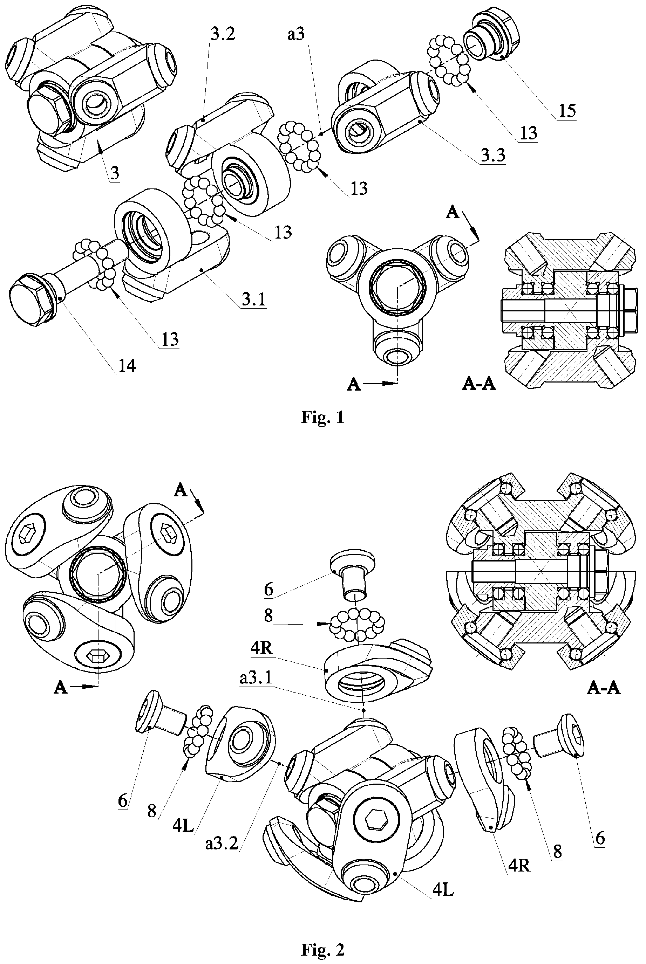

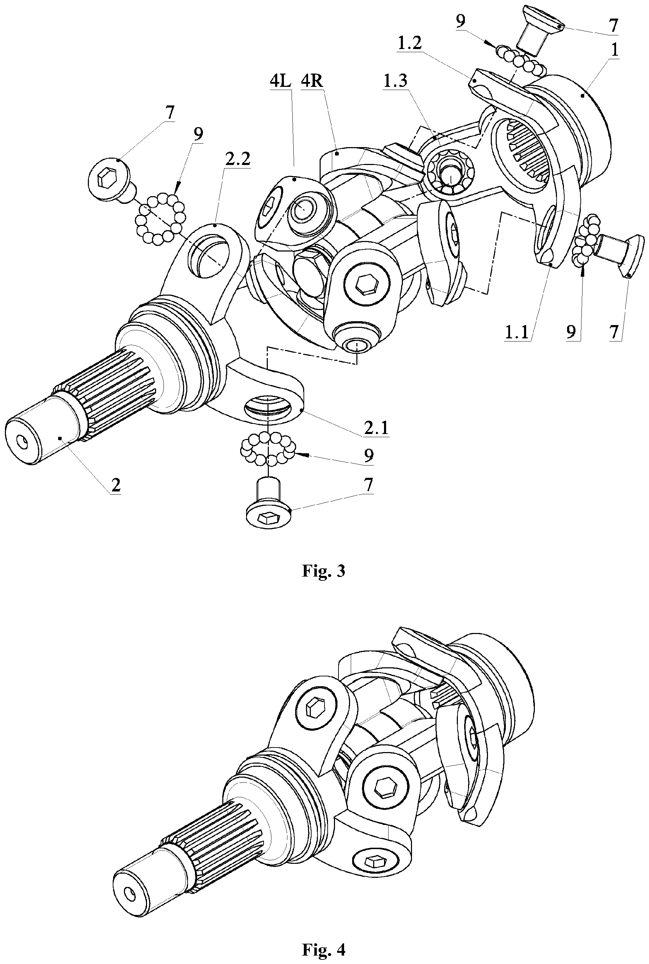

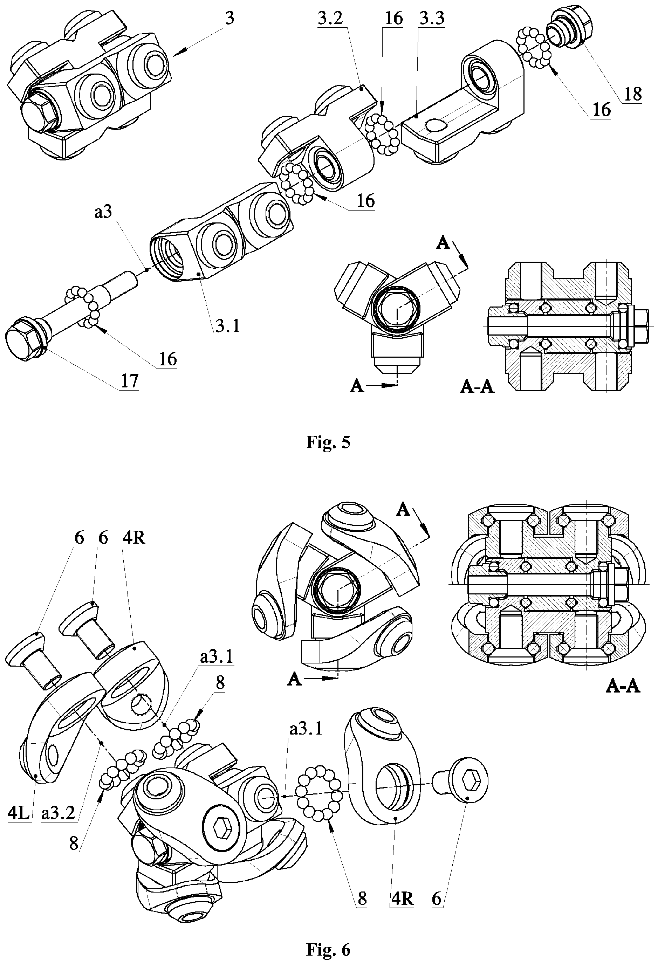

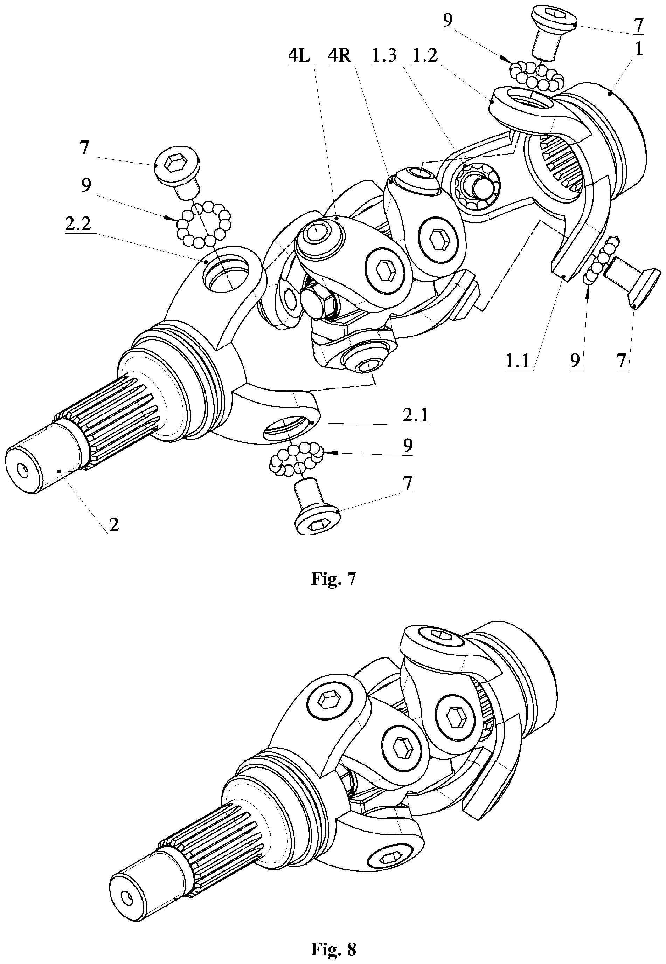

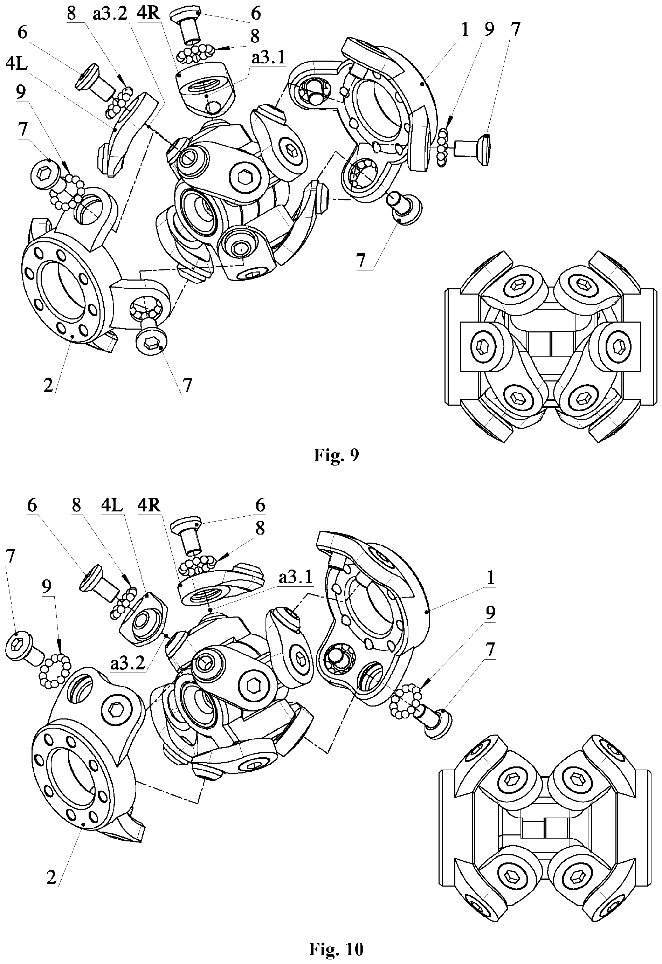

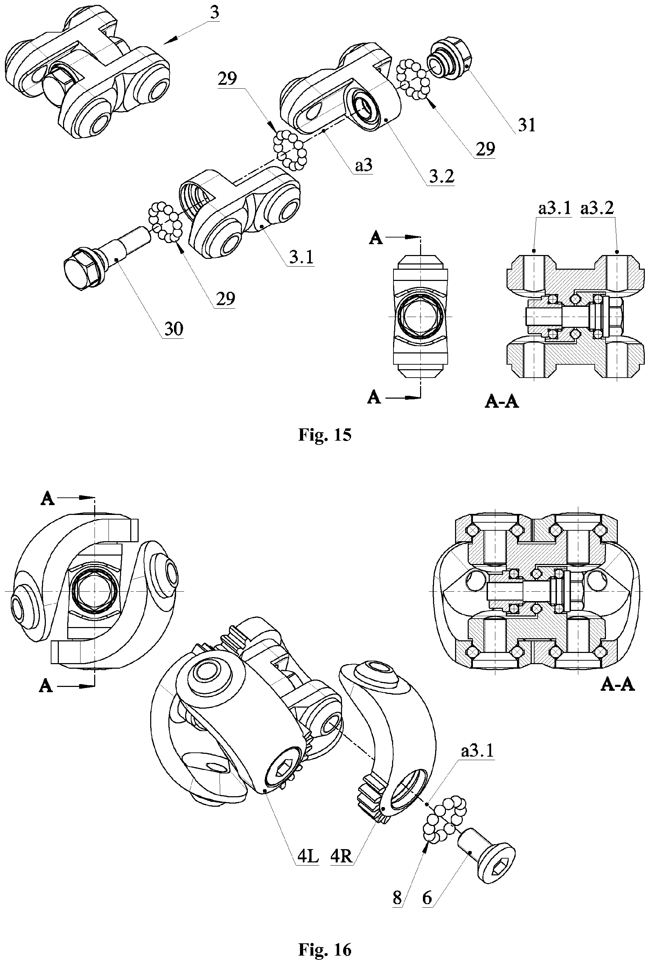

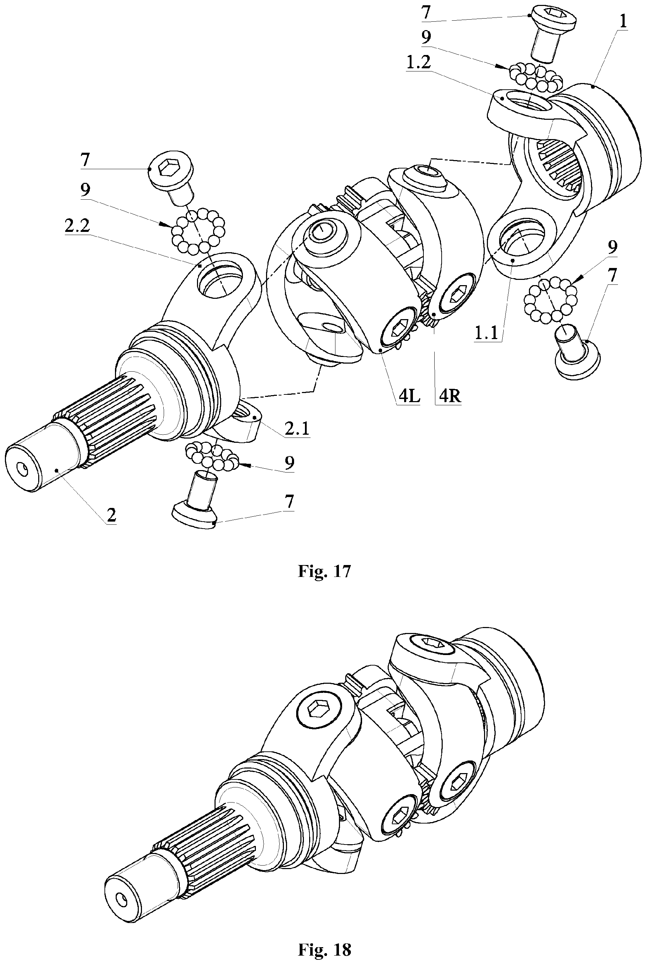

Example No. 1 of the implementation not according to the invention is shown in Fig. 1 through Fig. 4 The axis of the rotating hub **a3.1,** around which the arm **4R** rotates against the stabilising segment **3.1** (**3.2, 3.3**), is concurrent with the axis of the rotating hub **a3.2,** around which the arm **4L** rotates against the same stabilising segment, and both of the axes intersect each other exactly on the axis **a3** of the stabilising mechanism **3** and also exactly in the homokinetic point of the joint. The arms **4L** and **4R** are identical. The mode of rotational mounting of each arm **4L** and **4R** to each of the segments **3.1, 3.2** and **3.3** is similar to the previous case - a circular opening with the outer rolling path of the radial-axial bearing is formed in the body of each spherical arm, with fitted rolling elements **8.** The body of each stabilising segment **3.1**, **3.2** and **3.3** contains two spurs, carrying one half of the inner rolling path of the radial-axial bearing. The second half of the inner rolling path of the bearing is formed on the head of the bolt **6**, which passes through a circular opening in the spherical arm and by rolling elements **8** it anchors the spherical arm **4R** and **4L** to the stabilising segment **3.1, 3.2** or **3.3** in such a way that the arm can rotate only around one of its rotational axes. He connection of the spherical arms with the input shaft **1** and the output shaft **2** is implemented by the radial-axial bearing of a similar design. The rotating hubs **1.1,** **1.2**, and **1.3** are formed on the arms of the input shaft **1** and the rotating hubs **2.1**, **2.2**, and **2.3** are formed on the arms of the output shaft **2** represented by circular openings, containing outer rolling paths of the radial-axial bearings. The rolling elements **9** are fitted in these rolling paths. Both of the shafts (**1** and **2**) are connected with the rest of the joint by bolts **7,** passing through circular openings on each arm of the shafts and screwed into the spurs on each of the spherical arms.
Example No. 2 of the implementation not according to the invention is shown in Fig. 5 through Fig. 8. This variant of the joint is similar to the previous one, but it is different in the angle, which the axes of the rotating hubs **a3.1** and **a3.2** form. These axes of the rotating hubs do not intersect each other, but they run in parallel. Each of them intersects the axis **a3** of the stabilising mechanism **3** at a different point. This variant of the joint has thus two homokinetic planes and also two homokinetic points. The stabilising mechanism **3** is formed of the stabilising segments **3.1, 3.2** and **3.3**. The mutual rotational motion of the stabilising segments is enabled by the rolling elements **16,** which serve as radial-axial bearings. The stabilising segments and the radial-axial bearings are connected into a single whole by the bolt **17** and the nut **18. The remaining** joint hubs are identical in design, just like in two previous cases.
Example No. 3 of the implementation not according to the invention is shown in Fig. 9. Each arm has an opening formed with the outer rolling path of the radial-axial bearing, formed by rolling elements **9.** The way in which the spherical arms are mounted to the stabilising mechanism and to both of the shafts is the same as in previous versions of the joints. The axes of the rotating hubs **a3.1** and **a3.2** on each of the stabilising segments **3.1** and **3.2** intersect each other, and their point of intersection lies on the axis **a3** of the stabilising mechanism **3.** However, the axes of the rotating hubs **a3.1** and **a3.2** might be arranged coaxially or in parallel, or their mutual point of intersection might lie above or under the axis **a3** of the stabilising mechanism **3.**
Example No. 4 of the implementation not according to the invention is shown in Fig. 10. This joint is assembled of the same components as the previous joint is. The stabilising mechanism **3** is completely identical. The spherical arms, however, have the alternately opposite geometric orientation. The shape of the arms of the input shaft **1** and the output shaft **2** is different now - the arms are not arranged at regular intervals, but two and two arms are always grouped together. Other hubs of the joint are identical in design, just like in the previous case.
Example No. 5 of the implementation of the invention is shown in Fig. 11 through Fig. 14. This is a case of a constant velocity joint, where only two pairs of spherical arms are used. The stabilising mechanism consists of two stabilising segments **3.1** and **3.2** of two groups of rolling elements **25** functioning as a radial-axial bearing, the bolt **26,** the spring washer **27,** and the nut **28.** Two left **4L** and two right **4P** spherical arms are connected to the stabilising segments **3.1** and **3.2** by bolts **8.** The teeth of the conical involute gear are on the spherical arms in parts adjacent to the stabilising segment. The peak of the involute conical teeth lies in the homokinetic point of the joint. The teeth on both of the arms are arranged in such a way that both arms are engaged with each other. The gear on both arms in each pair provides for the same mirror-like position of left and right spherical arms in relation to the homokinetic plane. The mode of the rotating connection of the spherical arms with the stabilising mechanism is similar to the one in previous examples - into the outer rolling paths, created in the bodies of spherical arms, rolling elements **8** are inserted, which serve as a radial-axial bearing of each spherical arm. Each of the spherical arms is mounted to the stabilising mechanism by a bolt **6.**
   On the input shaft **1** and the output shaft **2,** there are two arms formed, where the rotating hubs (**1.1, 1.2** and **2.1, 2.2**) are located, represented by the openings containing the outer rolling paths of the radial-axial bearings. The axis of each of the rolling paths, and thus also the axis of the radial-axial bearing, points to the homokinetic point of the joint. The rolling elements **9** are inserted into each of the rolling paths of both of the shafts. The shafts are connected with the rest of the joint by bolts **7,** anchored into the spurs on the spherical arms.
Example No. 6 of the implementation of the invention is shown in Fig. 15 through Fig. 18. It is a constant velocity joint with two pairs of spherical arms. The rotational axes of the pair of the spherical arms, which are carried by the stabilising segments **3.1** and **3.2**, do not intersect each other on a single stabilising segment, but run in parallel. Each of these two axes has its point of intersection with the axis of the stabilising mechanism. This joint has thus two homokinetic points and two homokinetic planes. The stabilising mechanism consists of the stabilising segments **3.1** and **3.2**, of three groups of rolling elements **29,** of the bolt **30,** and of the special nut **31.** The stabilising segment **3.1** is identical with the segment **3.2**. The special nut **29** has rolling paths integrated in its body of one of three radial-axial bearings of the stabilising mechanism. The pair of spherical arms is then formed by the left spherical arm **4L** and right spherical arm **4P.** In the parts adjacent to the stabilising segment, both of the spherical arms have the involute spur gear with straight teeth formed. This gearing provides the same mirror-like position of the left spherical arm and the right spherical arm in relation to both homokinetic planes. Each spherical arm has rolling elements **8** inserted in its rolling path and by bolt **6** it is anchored to the stabilising mechanism. The input shaft **1,** as well as the output shaft **2,** have on their bodies two symmetrically spaced arms with the rotating hubs **1.1**, **1.2** and **2.1, 2.2** formed. In the openings, which represent the rotating hubs, there are outer rolling paths of the radial-axial bearings formed, consisting of groups of rolling elements **9.** The bolts **7** are used to form rotation connecting hubs between the shafts and the spherical arms.

Since constant velocity joints often work in an environment which is unfavourable to the rolling bearings, it will be necessary to protect the constant velocity joint against dust, water penetration or other impurities. The sensitive parts of the joint may be covered by a shape-flexible cap of elastic material in the form as is now common in other types of constant velocity joints. It is also possible to protect each rotation hub separately with rubber or plastic seals commonly used in engineering practice.

### Industrial Applicability

The field of application of constant velocity joints with a fixed centre point is very broad. It is possible to employ this new type of the joint mainly in passenger cars with the front-wheel drive or the all-wheel drive, in trucks and buses, the rolling stock, the fuel systems of helicopters, the shipbuilding, etc. This type of the joint may also be used as a replacement of a bevel gearing in crankshafts used in wind- or water power stations or in designing other machines. In general, this type of the joint may be used wherever there is a requirement to combine two shafts intersecting in one point and forming a variable or constant angle between their axes, so that the angular velocity and rotation of one shaft be at every moment the same as the angular velocity and rotation of the other shaft.

## Claims

1. Constant velocity joint, consisting of an input shaft (1), an output shaft (2) and a stabilising mechanism (3), which is inserted into the space between the input shaft (1) and the output shaft (2),
where the input shaft (1) is provided with several rotation hubs (1.1 to 1.n),
the output shaft (2) is provided with several rotation hubs (2.1 to 2.n),
the stabilization mechanism (3) consisting of identical or similar stabilising segments (3.1 to 3.n), bound together into a single unit with a possibility of mutual rotation of stabilising segments (3.1 to 3.n) around the axis (a3) of the stabilising mechanism (3),
while in the space between the input (1) and the output shaft (2) pairs of spherical arms are placed in a way that each spherical arm (4R) is rotationally fixed by one its end to one of rotation hubs (1.1 to 1.n) of the input shaft (1) and its other end is rotationally attached to one of stabilising segment (3.1 to 3.n) of the stabilising mechanism (3),
each spherical arm (4L) is rotationally fixed by one its end to one of rotation hubs (2.1 to 2.n) of the output shaft (2) and its other end is rotationally attached to one of stabilising segments (3.1 to 3.n) of the stabilising mechanism (3),
each stabilising segment (3.1 to 3.n) bears two separate rotational axes,
the axes of rotation hubs (a3.1, a3.2), which are carried by each of stabilising segments (3.1 to 3.n) and around which the spherical arms (4L, 4R) rotate, intersect each other on the axis (a3) of the stabilising mechanism (3) or intersect each other above the axis (a3) of the stabilising mechanism or intersect under the axis (a3) of the stabilising mechanism (3),
and the number of pairs of spherical arms equals to the number two **characterized by** the fact
that the spherical arm (4L) and the spherical arm (4R) in each of both pairs of spherical arms are connected by a mechanical bond, in a way that both arms are mutually bounded and may perform a motion, which is mirror-like toward a homokinetic plane.

2. Constant velocity joint according to claim 1, **characterized by the fact** that the spherical arm (4L) and the spherical arm (4R) are connected by involute gear.

3. Constant velocity joint according to claim 1 or 2, **characterized by the fact** that the number of pairs of spherical arms, consisting of one spherical arm (4L) and one spherical arm (4R), the number of stabilising segments (3.1 to 3.n) in the stabilising mechanism (3), the number of rotation hubs (1.1 to 1.n) of the input shaft (1) and the number of rotation hubs (2.1 to 2.n) of the output shaft (2) in one homokinetic joint is the same.

4. Constant velocity joint according to any of the claims 1 to 3 , **characterized by the fact** that the axes of rotation hubs (1.1 to 1.n) on the input shaft (1) intersect each other in one common point, which lies in the axis (a1) of the input shaft (1) and at the same time the axes of rotation hubs (2.1 to 2.n) on the output shaft (2) intersect each other in one common point, which lies in the axis (a2) of the output shaft (2).

5. Constant velocity joint according to any of the claims 1 to 3, **characterized by the fact** that the axes of rotation hubs (a4.1, a4.2), which are placed on both ends of the spherical arm (4R) and around which this spherical arm rotates in relation to the stabilising mechanism (3) and in relation to the input shaft (1), lie in the same plane and intersect each other and at the same time the axes of rotation hubs (a4.1, a4.2), which are placed on both ends of the spherical arm (4L) and around which this spherical arm rotates in relation to the stabilising mechanism (3) and in relation to the output shaft (2), lie in the same plane and intersect each other.

6. Constant velocity joint according to any of the claims 1 to 3, **characterized by the fact** that the rotary hub axis (a3.2) of the stabilization segment (3.1, 3.2), around which the spherical arm (4L) rotates and the rotation hub axis (a3.1) on the same stabilization segment, around which the spherical arm rotates (4R) intersect with each other and their point of intersection lies on the axis (A3) of the stabilization mechanism (3).

7. Constant velocity joint according to any of the claims 1 to 3, **characterized by the fact** that the rotary hub axis (a3.2) on the stabilization segment (3.1, 3.2) around which the spherical arm rotates (4L), and the rotation hub axis (a3.1) on the same stabilization segment around which the spherical arm rotates (4R), mutually intersect and their point of intersection lies above the axis (a3) of the stabilization mechanism (3).

8. Constant velocity joint according to any of the claims 1 to 3, 6 and 7, **characterized by the fact** that the apparent shape of the arrowhead, which is in each pair of spherical arms formed by the spherical arm (4L) and (4R), is in two pairs of spherical arms, which are immediately adjacent, oriented in the same or opposite direction.

9. Constant velocity joint according to any of the claims 1 to 8, **characterized by the fact** that all of the parts of the constant-velocity joint in the space between the input shaft (1) and the output shaft (2) are protected against the penetration of dirt and liquids by one-piece or multi-piece elastic or similar cover.

10. Constant velocity joint according to any of the claims 1 to 9, **characterized by the fact** that each rotary hub of the constant velocity joint is protected against the penetration of dirt or liquids by a separate sealing.

## Patentansprüche

1. Ein Gleichlaufgelenk, bestehende aus einer Eingangswelle (1), Ausgangswelle (2) und Stabilisierungsmechanismus (3), das im Raum zwischen der Eingangswelle (1) und der Ausgangswelle (2) platziert ist,
wo die Eingangswelle (1) mit einigen Rotationsknoten (1.1 bis 1.n) versehen ist,
die Ausgangswelle (2) mit einigen Rotationsknoten (2.1 bis 2.n) versehen ist,
ein Stabilisierungsmechanismus (3) welcher aus einigen gleichen oder ähnlichen Stabilisierungssegmenten (3.1 bis 3.n) besteht, die miteinander in ein Ganzes mit Verdrehungsmöglichkeit der Stabilisierungssegmenten (3.1 bis 3.n) um die Achse (a3) des Stabilisierungsmechanismus (3) herum verbunden sind,
wobei im Raume zwischen der Eingangswelle (1) und Ausgangswelle (2) Paare von sphärischen Hebeln platziert sind und zwar so, dass jeder sphärische Hebel (4R) mit einem seinen Ende am einen von Rotationsknoten (1.1 bis 1.n) der Eingangswelle (1) drehbar befestigt ist und mit seinem anderen Ende an einem von Stabilisierungssegmenten (3.1 bis 3.n) des Stabilisierungsmechanismus (3) drehbar befestigt ist,
jeder sphärische Hebel (4L) mit einem seinen Ende am drehbar an einem von Rotationsknoten (2.1 bis 2.n) der Ausgangswelle (2) befestigt ist und mit dem anderen Ende drehbar am einen von Stabilisierungssegmenten (3.1 bis 3.n) des Stabilisierungsmechanismus (3) befestigt ist,
jedes Stabilisierungssegment (3.1 bis 3.n) zwei separate Rotationsachsen trägt,
die Achsen der Rotationsknoten (a3.1 und a3.2), die von jedem von den Stabilisierungssegmenten (3.1 bis 3.n) getragen werden, und um diesen die sphärischen Hebel (4L, 4R) herumgedreht werden, sich auf der Achse (a3) des Stabilisierungsmechanismus (3) oder über der Achse (a3) des Stabilisierungsmechanismus (3) oder sich unter der Achse (a3) des Stabilisierungsmechanismus (3) schneiden,
die Anzahl der sphärischen Hebel gleich der Nummer zwei ist,
**dadurch gekennzeichnet, dass**
der sphärische Hebel (4L) und der sphärische Hebel (4R) sind so in jedem der zwei Paare der sphärischen Hebel mechanisch verbunden, dass die beiden Hebel miteinander verbunden sind und die Bewegung ausführen können, die spiegelbildlich zur homokinetischen Ebene ist.

2. Das Gleichlaufgelenk nach Anspruch 1, **dadurch gekennzeichnet, dass** der sphärische Hebel (4L) und der sphärische Hebel (4R) durch Evolventenverzahnung verbunden sind.

3. Das Gleichlaufgelenk nach Anspruch 1 oder 2, **dadurch gekennzeichnet, dass** die Anzahl von Paaren der sphärischen Hebel, gebildeten durch einen sphärischen Hebel (4L) und durch einen sphärischen Hebel (4R), die Anzahl von Stabilisierungselementen (3.1 bis 3.n) im Stabilisierungsmechanismus (3), die Anzahl von Rotationsknoten (1.1 bis 1.n) der Eingangswelle (1) und die Anzahl von Rotationsknoten (2.1 bis 2.n) der Ausgangswelle (2) in einem homokinetischen Gelenk gleich ist.

4. Das Gleichlaufgelenk nach beliebigem Anspruch 1 bis 3, **dadurch gekennzeichnet, dass** die Achsen von Drehgelenken (1.1 bis 1.n) auf der Eingangswelle (1) sich in einem gemeinsamen Punkt schneiden, der auf der Achse (a1) der Eingangswelle (1) liegt und die Achsen der Rotationsknoten (2.1 bis 2.n) sich zugleich an der Ausgangswelle (2) im einen gemeinsamen auf der Achse (a2) der Ausgangswelle (2) liegenden Punkt schneiden.

5. Das Gleichlaufgelenk nach beliebigem Anspruch 1 bis 3, **dadurch gekennzeichnet, dass** die Achsen der Rotationsknoten (a4.1, a4.2), die an beiden Enden des sphärischen Hebels (4R) platziert sind, und um sich dieser sphärische Hebel in Bezug auf den Stabilisierungsmechanismus (3) herumdreht und in Bezug auf die Eingangswelle (1) in einer Ebene liegen und sich miteinander schneiden und zugleich die Achsen der Rotationsknoten (a4.1, und 4.2), die an beiden Enden der sphärischen Hebel (4L) platziert sind, und um diese sich dieser sphärische Hebel in Bezug auf den Stabilisierungsmechanismus (3) herumdreht und in Bezug auf die Ausgangswelle (2) in einer Ebene liegen und sich gegenseitig schneiden.

6. Das Gleichlaufgelenk nach beliebigem Anspruch 1 bis 3, **dadurch gekennzeichnet, dass** die Achse des Rotationsknotens (a3.2) vom Stabilisationssegment (3.1, 3.2), um die sich der sphärische Hebel (4L) herumdreht und die Achse des Rotationsknotens (a3.1) des identischen Stabilisationssegments, um die sich der sphärische Hebel (4R) herumdreht, sich schneiden und dieser Schneidepunkt auf der Achse (a3) des Stabilisationsmechanismus (3) liegt.

7. Das Gleichlaufgelenk nach beliebigem Anspruch 1 bis 3, **dadurch gekennzeichnet, dass** die Achse des Rotationsknotens (a3.2) vom Stabilisationssegment (3.1, 3.2), um die sich der sphärische Hebel (4L) herumdreht und die Achse des Rotationsknotens (a3.1) des kongruenten Stabilisationssegments, um die sich der sphärische Hebel (4R) herumdreht, sich gegeneinander schneiden und dieser Schneidepunkt über der Achse (a3) des Stabilisationsmechanismus (3) liegt.

8. Das Gleichlaufgelenk nach beliebigem Anspruch 1 bis 3, 6, und 7 **dadurch gekennzeichnet, dass** die anscheinende Pfeilform, die in jedem Paar der sphärischen Hebel durch eine sphärische Hebel (4L) und (4R) gebildet wird, in zwei Paaren der sphärischen Hebel, die unmittelbar nebeneinander stehen, in gleicher oder entgegengesetzter Richtung orientiert wird.

9. Das Gleichlaufgelenk nach beliebigem Anspruch 1 bis 8 **dadurch gekennzeichnet, dass** alle Teile des homokinetischen Gelenks im Raum zwischen dem Eingangswelle (1) und der Ausgangswelle (2) gegen Eindringung von fremden Feststoffen und Flüssigkeiten durch einteilige oder mehrteilige elastische oder ähnliche Abdeckung geschützt werden.

10. Das Gleichlaufgelenk nach beliebigem Anspruch 1 bis 9, **dadurch gekennzeichnet, dass** jeder Rotationsknoten des homokinetischen Gelenks gegen Eindringung von fremden Feststoffen und Flüssigkeiten durch eine separate Dichtung geschützt wird.

## Revendications

1. Un joint homocinétique composé d'une arbre d'entrée (1), d'une arbre de sortie (2) et d'un mécanisme stabilisateur (3) qui est inséré dans l'espace entre l'arbre d'entrée (1) et l'arbre de sortie (2),
où l'arbre d'entrée (1) est équipés de plusieurs noeuds rotatifs (1.1 à 1.n),
l'arbre de sortie (2) est équipé de plusieurs noeuds rotatifs ((2.1 à 2.n),
le mécanisme stabilisateur (3) est constitué de plusieurs segments stabilisateurs identiques ou similaires (3.1 à 3.n), liés ensemble en une seule unité permettant la rotation partielle des segments stabilisateurs (3.1 àž 3.n) les uns par rapport aux autres autour de l'axe (a3) du mécanisme stabilisateur (3),
dans l'espace entre l'arbre d'entrée (1) et l'arbre de sortie (2) étant positionnés les paires des bras sphériques de sorte à ce que chaque bras sphérique (4R) soit fixé en rotation par l'une de ses extrémités à l'un des noeuds rotatifs (1.1 à I.n) de l'arbre d'entrée (1) et par l'autre extrémité est fixée en rotation à l'un des segments stabilisateurs (3.1 à 3.n) du mécanisme stabilisatuer (3),
chaque bras sphérique (4L) étant fixé en rotation par l'une de ses extrémités à l'un des noeuds rotatifs (2.1 à 2.n) de l'arbre de sortie (2) et l'autre extrémité est fixée en rotation à l'une des segments stabilisateur (3.1 à 3.n) du mécanisme stabilisateur (3),
chaque segment stabilisateur (3.1 à 3.n) porte deux axes de rotation autonomes des noeuds de rotation (a3.1, a3.2), qui sont portés par chacun des segments stabilisateurs (3.1 à 3.n) et autour desquels pivotent les bras sphériques (4L, 4R), ces axes se coupent à l'axe (a3) du mécanisme stabilisateur (3) ou se coupent au-dessus de l'axe (a3) du mécanisme stabilisateur (3) ou se coupent au-dessous l'axe (a3) du mécanisme stabilisateur (3),
le nombre des paires de bras sphériques est égal à deux,
le joint homocinétique est **caractérisé en ce que**
le bras sphérique (4L) et le bras sphérique (4R) dans chacun de deux paires de bras sphériques sont liés par une liaison mécanique, ces bras étant attachés ensemble et pouvant faire un mouvement, mouvement miroir par rapport au plan homocinétique.

2. Le joint homocinétique selon la revendication 1, **caractérisé en ce que** le bras sphérique (4L) a le bras sphérique (4R) sont liés par engrenage évolvent.

3. Le joint homocinétique selon la revendication 1 ou 2, **caractérisé en ce que** le nombre des paires de bras sphériques, constitués d'un bras sphérique (4L) et d'un bras sphérique (4R), le nombre des segments stabilisateurs (3.1 à 3.n) dans le mécanisme stabilisateur (3), le nombre des noeuds rotatifs (1.1 à 1.n) de l'arbre d'entrée (1) le nombre des noeuds rotatifs (2.1 à 2.n) de l'arbre de sortie (2) dans un joint homocinétique est identique.

4. Le joint homocinétique selon l'une des revendications 1 à 3, **caractérisé en ce que** les axes des noeuds rotatifs (1.1 à 1.n) sur l'arbre d'entrée (1) se coupent dans un commun point situé sur l'axe (a1) de l'arbre d'entrée (1) et, en même temps, les axes des noeuds rotatifs (2.1 à 2.n) sur l'arbre de sortie (2) se coupent dans point commun positionné sur l'axe (a2) de l'arbre de sortie (2).

5. Le joint homocinétique selon l'une des revendications 1 à 3, **caractérisé en ce que** les axes des noeuds rotatifs (a4.1, a4.2) positionnés sur les deux extrémité du bras sphériques (4R), autour desquels ce bras sphérique pivote par rapport au mécanisme stabilisateur (3) et par rapport à l'arbre d'entrée (1), sont situés dans un même plan et se coupent mutuellement et les axes de noeuds rotatifs (a4.1, a4.2) positionnés sur les deux extrémités du bras sphériques (4L), autour duquel ce bras sphérique pivote par rapport au mécanisme stabilisateur (3) et par rapport l'arbre de sortie (2), sont situés dans un même plan et se coupent mutuellement.

6. Le joint homocinétique selon l'une des revendications 1 à 3, **caractérisé en ce que** l'axe du noeud rotatif (a3.2) du segment stabilisateur (3.1, 3.2), autour duquel pivote le bras sphérique (4L) et l'axe du noeud rotatif (a3.1) du segment stabilisateur identique, autour duquel pivote le bras sphérique (4R), se coupent et cette intersection est située sur l'axe (a3) du mécanisme stabilisateur (3).

7. Le joint homocinétique selon l'une des revendications 1 à 3, **caractérisé en ce que** l'axe du noeuds rotatif (a3.2) du segment stabilisateur (3.1, 3.2), autour duquel pivote le bras sphérique (4L) et l'axe du noeud rotatif (a3.1) du segment stabilisateur identique, autour duquel pivote le bras sphérique (4R), se coupent mutuellement et cette intersection est située au-dessus de l'axe (a3) du mécanisme stabilisateur (3).

8. Le joint homocinétique selon l'une des revendications 1 à 3, 6 et 7, **caractérisé en ce que** la forme apparente de la flèche, qui est formée dans chaque paire de bras sphériques par les bras sphériques (4L) et (4R), est en deux paires de bras sphériques, immédiatement adjacents, orientés dans la même direction ou dans la direction opposée.

9. Le joint homocinétique selon l'une des revendications 1 à 8, **caractérisé en ce que** toutes les parties du joint homocinétique dans l'espace entre l'arbre d'entrée (1) et l'arbre de sortie (2) sont protégées contre la pénétration des impuretés et liquides par une enveloppe simple ou multiple en matière plastique ou une enveloppe analogue.

10. Le joint homocinétique selon l'une des revendications 1 à 9, **caractérisé en ce que** le noeud du joint homocinétique est sont protégé contre la pénétration des impuretés et liquides par une étanchéité séparée.
